# EUROPEAN PATENT SPECIFICATION

(11) **EP 1 688 211 B1**
(45) Date of publication and mention of the grant of the patent: **08.07.2015**
(21) Application number: 06250595.3
(22) Date of filing: 03.02.2006
(51) Int. Cl.: B23P 6/00, F01D 5/00, B23K 10/02

(54) **Plasma arc weld repair of high nickel metal alloys**
Reparatur von Metalllegierungen mit hohem Nickelgehalt mittels Plasmaschweissen
Réparation par soudure à l'arc de plasma d'alliages métaliques à forte teneur en nickel

(30) Priority: 03.02.2005 US 49788
(43) Date of publication of application: 09.08.2006
(73) Proprietor: United Technologies Corporation, Hartford, CT 06101 (US)
(72) Inventor: Lin, Wangen, Dublin, Ohio 43017-8250 (US); Larson, Gary J., Madison, Connecticut 06443 (US); Stone, Richard A., Stafford Springs, Connecticut 06076 (US); Matz, John, New Haven, Connecticut 06510 (US)
(74) Representative: Leckey, David Herbert

(56) References cited:
- EP-A- 1 466 695
- JP-A- 2002 066 745
- US-A- 4 705 203
- US-A- 4 878 953

## Description

### Field of the Disclosure

The present disclosure generally relates to plasma arc weld repairing of high nickel metal alloys and, in particular, to weld repairing thin cross-section components made from IN-100 material according to the preamble of claim 1.

### Background of the Disclosure

Weld repairing nickel-based super alloys having low aluminum and titanium content is relatively simple. However, as the aluminum and titanium content increases in concentration, welding becomes much more difficult. As the aluminum and titanium content increases, the ductility of the material is proportionately reduced. The low ductility causes the material to crack when using standard welding techniques.

Integrally bladed rotors are increasingly being used in high performance gas turbine engines. Their use is driven by requirements for improved performance and efficiency. Conventional rotors have airfoils that are retained by a mechanical connection, such as a dovetail slot formed into the rim of the disk. With an integrally bladed rotor, the airfoils and disk are typically formed from one contiguous block of metal and the block is machined to the final geometry. The improved performance achieved by the integrally bladed rotors result from their ability to retain airfoils with less disk mass than that required with a conventional rotor and from a reduction in leakage of compressed air through gaps between blade and disk.

Notwithstanding the performance improvement from the use of integrally bladed rotors, one major disadvantage has been the lack of reliable methods for repairing the airfoils that are damaged beyond blendable limits during operation. When the airfoils are damaged beyond the blendable limits, the entire rotor had to be removed from service and replaced with a new integrally bladed rotor. This is extremely costly in terms of raw material and labor expense.

Integrally bladed rotors made from IN-100 material or other nickel based super alloys with high aluminum and/or high titanium content have been difficult, if not impossible, to weld repair due to their inherently low ductility which causes the material to crack during the weld operation or during the post-weld heat treatment.

A method of refurbishing cast gas turbine engine components using a welding process is disclosed in US-A-4878953 which discloses a method according to the preamble of claim 1.

A further method is disclosed in JP 2002066745.

A method is described in the following disclosure which overcomes the difficulty in weld repairing integrally bladed airfoils made from nickel based super alloys.

### Summary of the Disclosure

In accordance with the invention there is provided a method as claimed in claim 1.

Other applications of the present invention will become apparent to those skilled in the art when the following description of the best mode contemplated for practicing the invention is read in conjunction with the accompanying drawings.

### Brief Description of the Drawings

Fig. 1. is a schematic representation of a plasma arc welding device;
Fig. 2 is a perspective view of a portion of an integrally bladed rotor with a damaged airfoil extending therefrom;
Fig. 3 is a perspective view of the airfoil shown in Fig. 2 after the damaged portion has been machined;
Fig. 4 is a perspective view of the airfoil of Fig. 2 having a plurality of weld beads applied to the damaged portion;
Fig. 5 is a perspective view of the airfoil of Fig. 2 illustrating a machining operation on the weld;
Fig. 6 is a perspective view of a finished airfoil; and
Fig. 7 is a flow chart illustrating a method for repairing a component made from a high hardener content nickel based material.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the spirit and scope of the disclosure as defined by the appended claims.

### Detailed Description of the Disclosure

The present disclosure provides a method for weld repairing components that are made from low ductile, high hardener content nickel super alloys such as IN-100 or the like. IN-100 is a vacuum melted and investment cast nickel-base alloy recommended for high temperature applications of approximately 1850-1900°F. IN-100 was developed by International Nickel Co., Inc. The material composition includes: chromium 8.0-11.0%, cobalt 13.0-17.0%, molybdenum 2.0-4.0%, vanadium .70-1.20%, titanium 4.50-5.00%, aluminum 5.0-6.0%, carbon 0.15-0.20%, boron 0.01-0.02%, zirconium 0.03-0.09%, iron 1.0% maximum, manganese 0.20% maximum, silicon 0.20% maximum, sulfur 0.015% maximum, with the remainder being nickel. In one embodiment of the present disclosure, the component illustrated is an airfoil formed on an integrally bladed rotor, however, other components with similar geometry that are formed of IN-100 or similar materials used in relatively high temperature applications such as compressor stator vanes, diffuser vanes, and the like, are also contemplated.

The method described herein advantageously overcomes weld repair problems inherent with high nickel super alloys having a minimum percentage of hardening elements such as aluminum and titanium. These hardening elements cause the nickel based material to have low ductility and thus, are susceptible to cracking during a typical weld repair operation or in subsequent post-weld heat treatment. The welding device employed with the present disclosure can be one of any commonly used in the industry, however, with materials such as IN-100 it is extremely difficult to draw the material into a wire, a stick, or a rod because of the brittle nature of the material at standard ambient conditions. Therefore, the repair method would typically include the use of a plasma arc welding device or a microplasma arc welding device using powder feedstock as will be described hereinafter.

Integrally bladed rotors can be made from IN-100 material to meet temperature requirements in high performance gas turbine engines. IN-100 has excellent properties for relatively high temperature components such as those used in the compressor section of a gas turbine engine, however, the airfoils have a tendency to crack during weld repair operations or in post-weld heat treatment. IN-100 has been developed from a class of high nickel super alloys that have a relatively high percentage of hardening material such as aluminum and titanium. The aluminum content in IN-100 is over five percent by weight, and the titanium content is approximately 5.5% by weight. These percentages of hardeners place IN-100 well above the accepted composition limits for weld repairing. Typically, nickel based alloys that have higher hardener content than three percent aluminum or six percent titanium are extremely difficult to weld due to the brittle nature of the low ductility material resulting from such a material composition.

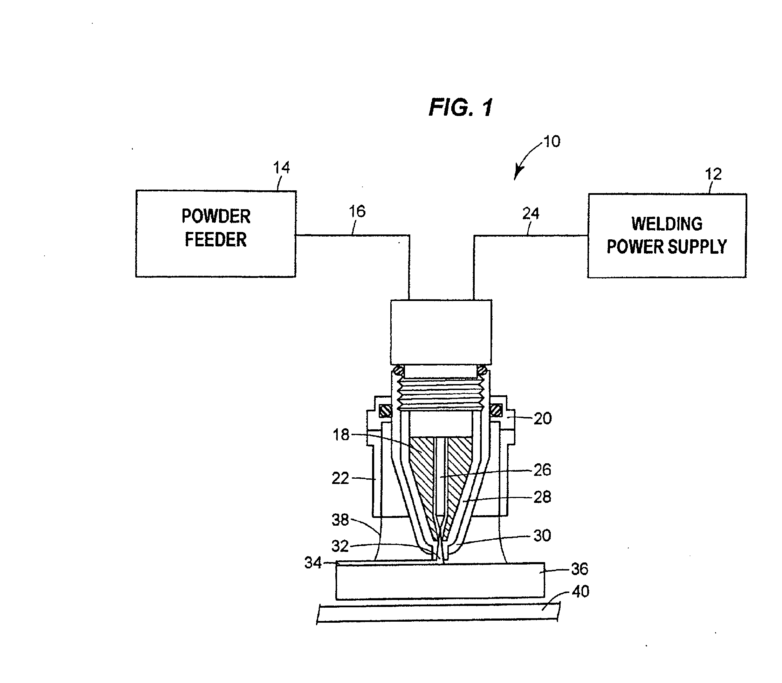

Referring now to Fig. 1, a plasma arc welding device 10 is generally represented. A welding power supply 12 is operationally connected to the plasma arc welding device 10 to provide electrical power thereto. A powder feeder 14 delivers powdered metal such as IN-100 through a carrier gas conduit 16 to a nozzle torch 18. The nozzle torch 18 can include a shield gas cup 20 and a shield gas nozzle 22 surrounding the exterior perimeter of the nozzle torch 18. The welding power supply 12 is electrically connected via an electrical conduit 24 to an electrode 26. The carrier gas conduit 16 transports the powdered material to a powder channel 28 that extends through the nozzle torch 18 toward a nozzle tip 30. The electrode 26 forms a plasma arc 32 through the powdered material as the powdered material exits the powder channel 28 at the nozzle tip 30. The plasma arc 32 heats the powdered material and melts a portion of a component 36 at the point of impact. The plasma arc 32 causes the powdered material to liquify and form a weld deposit or bead 34 on the component 36.

Shield gas 38 is delivered through the shield gas nozzle 22 to provide an inert environment around the plasma arc 32. The shield gas prevents oxidation and impurities in the weld deposit 34 as is known to those skilled in the art. The welding operation can alternatively be performed inside an inert gas purge box (not shown) where the welding device 10 and component 36 are completely surrounded by inert shielding gas such as argon.

A heat sink 40 is positioned below the edge of component 36 that is to be welded to provide a controlled environment to promote uniform heat transfer through the component 36. The heat sink 40 may be made from a variety of materials such as copper, steel or graphite. The heat sink 40 has been shown to provide satisfactory heat transfer when positioned a distance away from the edge of component 36 that is to be welded, such as approximately .200 inches (0.508 cm), during welding.

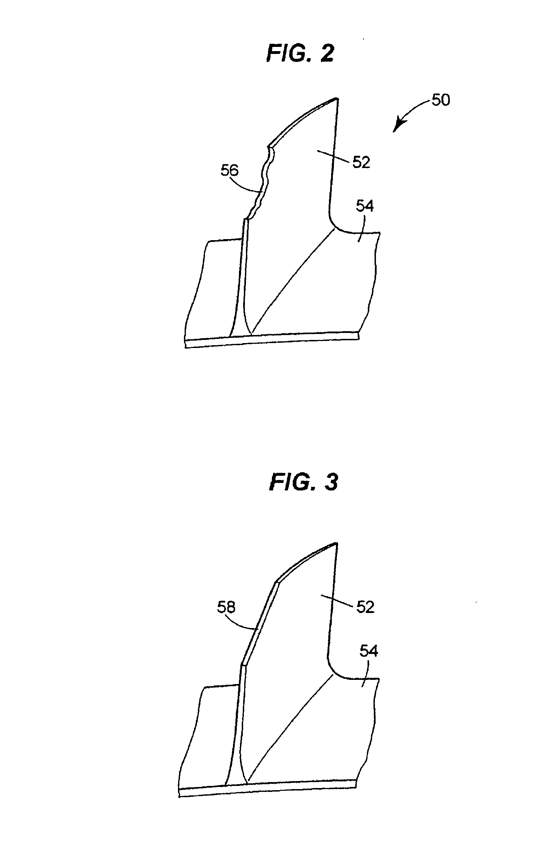

Figs. 2-6 illustrate one embodiment for weld repairing a thin cross-sectioned component. As used herein, "thin" is defined as up to approximately 0.25 inch (0.635 cm), although other dimensions are certainly possible. Fig. 2 shows a portion of an integrally bladed rotor 50 wherein the airfoil 52 is integrally formed with a disk 54. The disk 54 is partially cut away for ease of illustration. Integrally bladed rotors 50 are typically formed from a single block of metal. In a conventional compressor rotor arrangement, when an airfoil is damaged, the airfoil can be removed from the disk and replaced with a new airfoil. However, when an airfoil on an integrally bladed rotor 50 is damaged beyond a predefined limit, the airfoil must be repaired or the entire integrally bladed rotor 50 must be replaced at great expense in both materials and labor cost.

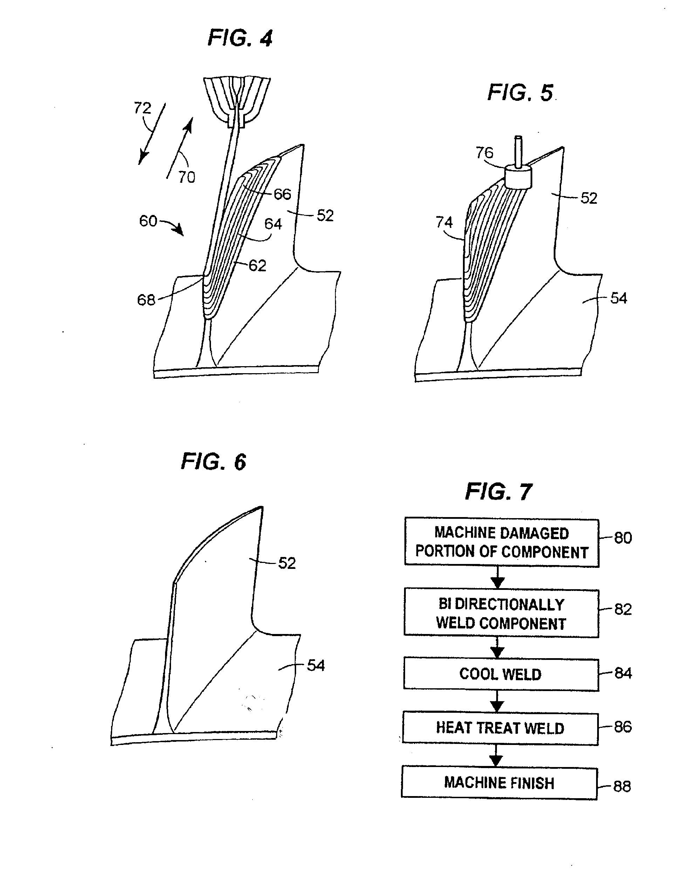

The damaged portion 56 of the airfoil, shown in Fig. 2, can be machined with a suitable device, such as a grinder or machine tool, to form a substantially straight machined edge 58 as shown in Fig. 3. Fig. 4 illustrates the plasma arc welding device 10 applying weld lines or beads 60 to build up the airfoil 52 where the airfoil 52 was previously damaged. For ease of illustration, the welding device 10 is depicted farther away from the airfoil 52 than would likely be used in actual practice. In practice, it is to be understood the torch on welding device 10 would be fairly close to the airfoil 52, for example, approximately 0.2 in. (0.508 cm), although other distances are possible. Each weld bead 60 is formed by one pass of the plasma arc welding device 10. A first weld bead 62 is deposited on the airfoil 52 as the welding device 10 is moved in a first direction corresponding to arrow 70. A second weld bead 64 is deposited atop the first weld bead 62 by immediately reversing the welding device upon reaching the end of the airfoil so that it is moving in a direction corresponding to arrow 72 which is in the opposite direction of the application first weld bead 62. This continuous bi-directional movement of the plasma arc device has been found to produce crack-free welds in airfoils 52 made from IN-100. The continuous bi-directional pattern of the weld application eliminates thermal transients at the ends of the weld. Further, successive weld beads should be applied in a continuous manner with no delay between passes. The plasma arc welding torch 10 can be controlled electronically with a multi-axis positioning system, commonly known to those skilled in the art. Optionally, the plasma arc welding device can be hand operated when a particular application lends itself to such processing.

Referring now to Fig. 5, after the airfoil 52 has been completely built up with welded material 60 to the approximate original height 74 and the appropriate post weld heat treatment operations are competed, the weld material 60 can be machined with a suitable device, such as a grinding bit 76 or the like. The airfoil 52 is machined to the finished geometry as shown in Fig. 6, and is ready for operational use after the completion of any other processes appropriate to the specific application, such as post-machining stress relief, coating application, and shot peening.

Referring now to Fig. 7, the method employed by the present disclosure can be used to weld repair any high hardener content nickel super alloy without producing cracks in the material. The method is particularly advantageous for repairing complex geometry such as airfoils on an integrally bladed rotor. In operation, a damaged component is machined to remove the damaged portion of the component to provide a relatively smooth surface for applying a weld bead at block 80. A welding device moves in a continuous bi-directional manner while applying weld beads to a component at block 82. The weld material is cooled at block 84 and appropriately heat treated at block 86. The component is then finish machined at block 88 and is ready to be placed back into regular service after other applicable operations.

While the preceding text sets forth a detailed description of certain embodiments of the invention, it should be understood that the legal scope of the invention is defined by the claims set forth at the end of this patent. The detailed description is to be construed as exemplary only and does not describe every possible embodiment of the invention since describing every possible embodiment would be impractical, if not impossible.

## Claims

1. A method for weld repairing airfoils made from a nickel based super alloy material, comprising the steps of:
removing a damaged portion of the airfoil;
feeding powdered nickel alloy based material including 4.50-5.00% titanium and 5.0-6.0% aluminum by weight to a plasma arc welding device;
charaterized by further comprising:
depositing a plurality of weld beads along the damaged portion of the airfoil in a continuous bi-directional pattern with the welding device wherein there is no delay between successive weld passes; and
providing a chill block for a heat sink.

2. The method of claim 1, wherein the nickel based material includes approximately fifty percent nickel by weight.

3. The method of any preceding claim, wherein the airfoil is located on a rotating component.

4. The method of claim 3, wherein the rotating component is a compressor rotor.

5. The method of any one of claims 1 to 4, wherein the airfoil is located on a static component.

6. The method of claim 5, wherein the static component is a compressor stator.

7. The method of any preceding claim, further including electronically controlling the welding device with a multiple axis positioning system.

8. The method of any preceding claim, further including hand controlling the welding device.

9. The method of any preceding claim, further including cooling the weld material.

10. The method of any preceding claim, further including heat treating the weld material.

11. The method of any preceding claim, further including machining the weld material to a desired specification.

12. The method of any preceding claim, wherein the airfoil is an airfoil of an integrally bladed rotor in a gas turbine engine, the integrally bladed rotor made from 8.0-11.0% chromium, 13.0-17.0% cobalt, 2.0-4.0% molybdenum, 0.70-1.20% vanadium, 4.50-5.00% titanium, 5.0-6.0% aluminum, 0.15-0.20% carbon, 0.01-0.02% boron, 0.03-0.09% zirconium, 1.0% maximum iron, 0.20% maximum manganese, 0.20% maximum silicon, 0.015% maximum sulfur, with the remainder being nickel,
and wherein the step of depositing a plurality of weld beads comprises:
moving the welding device in a first direction while depositing a first weld bead on the damaged portion; and
moving the welding device in a second direction while depositing a second weld bead adjacent the first weld bead, wherein the first and second directions are bi-directionally opposing one another.

13. The method of any of claims 1 to 13, wherein the nickel alloy consists of 8.0-11.0% chromium, 13.0-17.0% cobalt, 2.0-4.0% molybdenum, 0.70-1.20% vanadium, 4.50-5.00% titanium, 5.0-6.0% aluminum, 0.15-0.20% carbon, 0.01-0.02% boron, 0.03-0.09% zirconium, 1.0% maximum iron, 0.20% maximum manganese, 0.20% maximum silicon, 0.015% maximum sulfur, with the remainder being nickel.

14. The method of any preceding claim wherein the chill block positioned approximately 0.508 cm (0.200) inches from the weld surface.

## Patentansprüche

1. Verfahren zum schweißenden Reparieren von Schaufelblättern aus einem Superlegierungsmaterial auf Nickelbasis, folgende Schritte umfassend:
Entfernen eines beschädigten Abschnitts des Schaufelblatts;
Zuführen eines auf einer Pulvernickellegierung basierenden Materials mit 4,50-5,00 % Titan und 5,0-6,0 % Aluminium nach Gewicht zu einer Plasmaschweißvorrichtung;
**dadurch gekennzeichnet, dass** es ferner Folgendes umfasst:
Aufbringen einer Mehrzahl von Schweißperlen entlang dem beschädigten Abschnitt des Schaufelblatts in einem kontinuierlichen bidirektionalen Muster mit der Schweißvorrichtung, wobei keine Verzögerung zwischen aufeinanderfolgenden Schweißlagen vorliegt; und
Bereitstellen eines Kühlblocks für eine Wärmesenke.

2. Verfahren nach Anspruch 1, wobei das nickelbasierte Material etwa fünfzig Prozent Nickel nach Gewicht aufweist.

3. Verfahren nach einem der vorangehenden Ansprüche, wobei das Schaufelblatt an einem sich drehenden Bauteil angeordnet ist.

4. Verfahren nach Anspruch 3, wobei das sich drehende Bauteil ein Kompressorrotor ist.

5. Verfahren nach einem der Ansprüche 1-4, wobei das Schaufelblatt an einem statischen Bauteil angeordnet ist.

6. Verfahren nach Anspruch 5, wobei das statische Bauteil ein Kompressorstator ist.

7. Verfahren nach einem der vorangehenden Ansprüche, ferner einschließend elektronisches Steuern der Schweißvorrichtung mit einem Mehrachsenpositionierungssystem.

8. Verfahren nach einem der vorangehenden Ansprüche, ferner einschließend manuelles Steuern der Schweißvorrichtung.

9. Verfahren nach einem der vorangehenden Ansprüche, ferner einschließend Kühlen des Schweißmaterials.

10. Verfahren nach einem der vorangehenden Ansprüche, ferner einschließend Wärmebehandeln des Schweißmaterials.

11. Verfahren nach einem der vorangehenden Ansprüche, ferner einschließend Bearbeiten des Schweißmaterials gemäß einer gewünschten Spezifikation.

12. Verfahren nach einem der vorangehenden Ansprüche, wobei das Schaufelblatt ein Schaufelblatt eines einstückig beschaufelten Rotors in einem Gasturbinentriebwerk ist, wobei der einstückig beschaufelte Rotor aus 8,0-11,0 % Chrom, 13,0-17,0 % Kobalt, 2,0-4,0 % Molybdän, 0,70-1,20 % Vanadium, 4,50-5,00 % Titan, 5,0-6,0 % Aluminium 0,15-0,20 % Kohlenstoff, 0,01-0,02 % Bor, 0,03-0,09 % Zirkonium, maximal 1,0 % Eisen, maximal 0,20 % Mangan, maximal 0,20 % Silizium, maximal 0,015 % Schwefel und ansonsten Nickel hergestellt ist,
und wobei der Schritt des Aufbringens einer Mehrzahl von Schweißperlen Folgendes umfasst:
Bewegen der Schweißvorrichtung in eine erste Richtung, während eine erste Schweißperle auf den beschädigten Abschnitt aufgebracht wird; und
Bewegen der Schweißvorrichtung in eine zweite Richtung, während eine zweite Schweißperle benachbart zur ersten Schweißperle aufgebracht wird, wobei die erste und zweite Richtung einander bidirektional entgegengesetzt sind.

13. Verfahren nach einem der Ansprüche 1-13, wobei die Nickellegierung aus 8,0-11,0 % Chrom, 13,0-17,0 % Kobalt, 2,0-4,0 % Molybdän, 0,70-1,20 % Vanadium, 4,50-5,00 % Titan, 5,0-6,0 % Aluminium 0,15-0,20 % Kohlenstoff, 0,01-0,02 % Bor, 0,03-0,09 % Zirkonium, maximal 1,0 % Eisen, maximal 0,20 % Mangan, maximal 0,20 % Silizium, maximal 0,015 % Schwefel und ansonsten Nickel besteht.

14. Verfahren nach einem der vorangehenden Ansprüche, wobei der Kühlblock etwa 0,508 cm (0,200 Zoll) von der Schweißfläche entfernt angeordnet wird.

## Revendications

1. Procédé de réparation par soudage de profilés constitués d'un matériau de type super alliage à base de nickel, comprenant les étapes suivantes :
suppression d'une partie endommagée du profilé ;
application de matériau à base d'alliage de nickel en poudre contenant 4,50 à 5,00 % de titane et 5,0 à 6,0 % d'aluminium en poids sur un appareil de soudage à l'arc de plasma ;
**caractérisé par** le fait de comprendre en outre :
le dépôt d'un ensemble de cordons de soudure le long de la partie endommagée du profilé selon un motif bidirectionnel continu avec l'appareil de soudage dans lequel il n'y a pas de retard entre les passages successifs de soudage ; et
l'utilisation d'une éprouvette de trempe pour un puits thermique.

2. Procédé selon la revendication 1, dans lequel le matériau à base de nickel contient approximativement cinquante pour cent de nickel en poids.

3. Procédé selon l'une quelconque des revendications précédentes, dans lequel le profilé se trouve sur un composant rotatif.

4. Procédé selon la revendication 3, dans lequel le composant rotatif est un rotor de compresseur.

5. Procédé selon l'une quelconque des revendications 1 à 4, dans lequel le profilé se trouve sur un composant statique.

6. Procédé selon la revendication 5, dans lequel le composant statique est un stator de compresseur.

7. Procédé selon l'une quelconque des revendications précédentes, comprenant en outre la commande électronique de l'appareil de soudage par un système de positionnement à axes multiples.

8. Procédé selon l'une quelconque des revendications précédentes, comprenant en outre la commande manuelle de l'appareil de soudage.

9. Procédé selon l'une quelconque des revendications précédentes, comprenant en outre le refroidissement du matériau de soudure.

10. Procédé selon l'une quelconque des revendications précédentes, comprenant en outre le traitement thermique du matériau de soudure.

11. Procédé selon l'une quelconque des revendications précédentes, comprenant en outre l'usinage du matériau de soudure selon une spécification voulue.

12. Procédé selon l'une quelconque des revendications précédentes, dans lequel le profilé est un profilé d'un rotor à aubes intégrées dans un moteur de turbine à gaz, le rotor à aubes intégrées étant constitué de 8,0 à 11,0 % en chrome, de 13,0 à 17,0 % en cobalt, de 2,0 à 4,0 % en molybdène, de 0,70 à 1,20 % en vanadium, de 4,50 à 5,00 % en titane, de 5,00 à 6,0 % en aluminium, de 0,15 à 0,20 % en carbone, de 0,01 à 0,02 % en bore, de 0,03 à 0,09 % en zirconium, de 1,0 % au maximum de fer, de 0,20 % au maximum de manganèse, de 0,20 % au maximum de silicium, de 0,015 % au maximum de soufre, le complément étant du nickel,
et où l'étape de dépôt d'une pluralité de cordons de soudure comprend :
le déplacement de l'appareil de soudage dans un premier sens lors du dépôt d'un premier cordon de soudage sur la partie endommagée ; et
le déplacement de l'appareil de soudage dans un deuxième sens lors du dépôt d'un deuxième cordon de soudage adjacent au premier cordon de soudage, les premier et deuxième sens étant bidirectionnellement opposés l'un par rapport à l'autre.

13. Procédé selon l'une quelconque des revendications 1 à 13, dans lequel l'alliage de nickel est constitué de 8,0 à 11,0 % en chrome, de 13,0 à 17,0 % en cobalt, de 2,0 à 4,0 % en molybdène, de 0,70 à 1,20 % en vanadium, de 4,50 à 5,00 % en titane, de 5,00 à 6,0 % en aluminium, de 0,15 à 0,20 % en carbone, de 0,01 à 0,02 % en bore, de 0,03 à 0,09 % en zirconium, de 1,0 % au maximum de fer, de 0,20 % au maximum de manganèse, de 0,20 % au maximum de silicium, de 0,015 % au maximum de soufre, le complément étant du nickel.

14. Procédé selon l'une quelconque des revendications précédentes, dans lequel l'éprouvette de trempe est positionnée approximativement à 0,508 cm (0,200 pouce) de la surface de soudure.
